# EUROPEAN PATENT SPECIFICATION

(11) **EP 1 361 506 B1**
(45) Date of publication and mention of the grant of the patent: **29.09.2010**
(21) Application number: 03250313.8
(22) Date of filing: 17.01.2003
(51) Int. Cl.: G09G 5/02, G06F 3/14, G06F 17/30

(54) **Apparatus and method for converting metadata color temperature and apparatus and method for providing metadata**
Verfahren und Gerät zur Korrektur von Farbtemperatur-metadaten
Méthode et dispositif pour corriger meta-données associées à température de couleur

(30) Priority: 10.05.2002 KR 2002025910
(43) Date of publication of application: 12.11.2003
(73) Proprietor: SAMSUNG ELECTRONICS CO., LTD., Suwon-City, Kyungki-do (KR)
(72) Inventor: Kim, Sang-kyun, Yongin-city, Kyungki-do (KR); Park, Du-sik, Suwon-city, Kyungki-do (KR); Kim, Chang-yeong, Yongin-city, Kyungki-do (KR); Yoo, Ki-won, Songpa-gu, Seoul 138-160 (KR); Huh, Young-sik, Anyang-city, Kyungki-do (KR)
(74) Representative: Greene, Simon Kenneth

(56) References cited:
- EP-A- 1 276 057
- WO-A-96/01467
- US-B1- 6 249 601
- PATENT ABSTRACTS OF JAPAN vol. 1998, no. 13, 30 November 1998 (1998-11-30) & JP 10 224643 A (CANON INC), 21 August 1998 (1998-08-21)
- PATENT ABSTRACTS OF JAPAN vol. 1999, no. 03, 31 March 1999 (1999-03-31) & JP 10 340336 A (SAMSUNG ELECTRON CO LTD), 22 December 1998 (1998-12-22)
- CORRIDONI J M ET AL: "Image query by semantical color content" PROCEEDINGS OF THE WORKSHOP ON ADVANCED VISUAL INTERFACES AVI, XX, XX, 27 May 1996 (1996-05-27), pages 213-222, XP002289265
- DEL BIMBO A: "A perspective view on visual information retrieval systems" CONTENT-BASED ACCESS OF IMAGE AND VIDEO LIBRARIES, 1998. PROCEEDINGS. IEEE WORKSHOP ON SANTA BARBARA, CA, USA 21 JUNE 1998, LOS ALAMITOS, CA, USA,IEEE COMPUT. SOC, US, 1998, pages 108-109, XP010293866 ISBN: 0-8186-8544-1

## Description

The present invention relates to a method and an apparatus for controlling the color temperature of displayed images according to a users preference, and more particularly, to a method and an apparatus for controlling display preference by using color temperature metadata.

In conventional techniques, the color temperature of output images provided to a user, i.e., a customer of image contents, has been adjusted by calculating the color temperature of the corresponding images in a user terminal.

However, according to such conventional techniques, it is difficult to reduce the cost of manufacturing user terminals since such user terminals must be manufactured to be able to compute the color temperatures of images. In addition, it is difficult to store the color temperatures of images, which are already computed, in a database as metadata and to re-use the metadata.

EP 1296 057, which is relevant under Article 54 (3) EPC, describes a browser which browses image data according to color temperature. The browser calculates color temperatures of images and stores them in a database.

JP 10-224643 describes a color matching module that stores a source color profile. This is compared with a monitor color profile, and the colors of the image displayed are adjusted for a true color output.

JP 10-340336 describes a method of determining an illumination color of an image from the image.

The present invention provides an apparatus and a method for providing metadata corresponding to the color temperatures of an input image.

The present invention also provides an apparatus and a method for converting such metadata into predetermined color temperatures.

According to an aspect of the present invention, there is provided an apparatus according to claim 5.

Preferably, the apparatus further includes an image display unit which outputs the input image, the color temperature of which is converted, and then provides the input image to a user.

Preferably, the image metadata decoding unit calculates the color temperature of an image coded as metadata and decodes the metadata following the way the image is coded.

Preferably, the image metadata decoding unit includes a predetermined look-up table, in which representative color temperatures of color temperature ranges, which the color temperature belongs to, and their corresponding metadata are recorded, and finds a color temperature value corresponding to certain metadata by searching the metadata in the look-up table.

According to still another aspect of the present invention, there is provided a method for converting the color temperature of an image according to claim 1. The method includes receiving a predetermined input image, metadata corresponding to the color temperature of the input image, and color temperature information preferred by a user, calculating the color temperature corresponding to the metadata, and converting the color temperature of the input image using the color temperature calculated based on the metadata and the color temperature information preferred by a user.

Preferably, the method further includes outputting the input image, the color temperature of which is converted, and providing the input image to a user.

The above features and advantages of the present invention will become more apparent by describing in detail exemplary embodiments thereof with reference to the attached drawing in which:

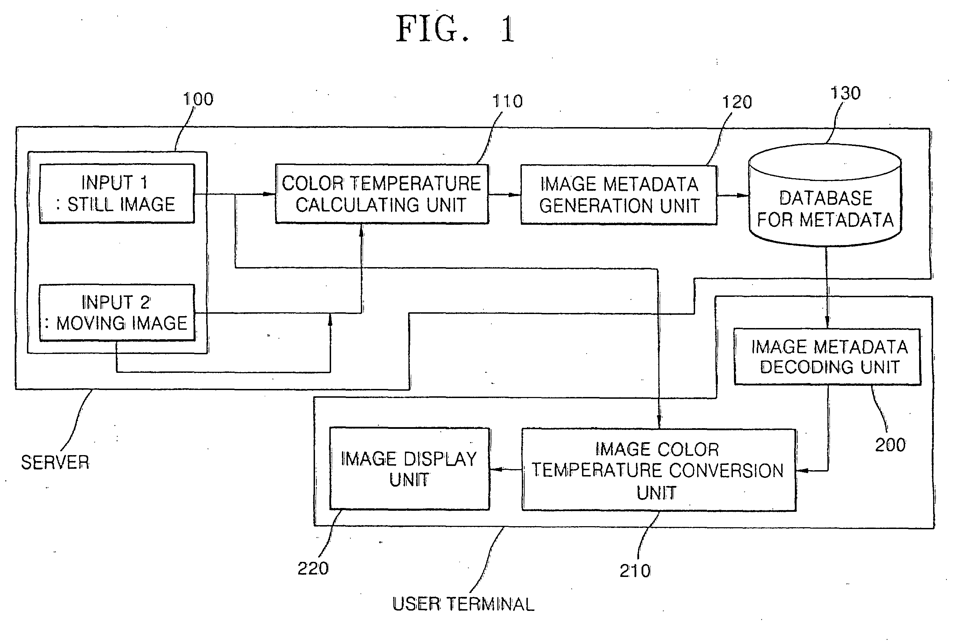

FIG. 1 is a diagram of an apparatus for controlling the display of images according to a user's preference by using color temperature metadata according to the present invention.

Hereinafter, the present invention will be described in greater detail with reference to the accompanying drawing.

FIG. 1 is a diagram of an apparatus for controlling the display of images by using color temperature metadata according to the present invention. Referring to FIG. 1, input images of an image input unit include still images input from an image database and a bunch of still images constituting a moving image. Such still images may refer to representative images of the moving image.

A color temperature calculating unit 110 converts images input from the image input unit into a CIE XYZ color space and approximates the chromaticity coordinates (x, y) of a light source. Next, the color temperature calculating unit 110 converts the chromaticity coordinates (x, y) into correlated color temperatures which will act as descriptors representing images. The method of deriving chromaticity coordinates is disclosed in Japanese Patent No. 10-118862, and Korean Patent Nos. 237284 and 230446.

An image metadata generation unit 120 converts the color temperatures of the input images into metadata. Here, the metadata refers to a simple method of representing images. In other words, metadata corresponding to the input images stored in a database is transmitted to a user. For example, a color temperature of 1,667 K - 25,000 K can be represented by 15 bits.

Alternatively, metadata can be generated by the following method. Input images can be sorted according to what a viewer feels about each of the input images, namely, according to the degree to which each of the input images looks warm, by using color temperatures. In other words, the input images can be classified as hot images, warm images, moderate images, or cool images by mapping the degree to which each of the input images looks warm in a certain range of color temperatures. For example, hot images can be mapped in a color temperature range of below 2,250 K, warm images can be mapped in a color temperature range of 2,251 K - 4,170 K, moderate images can be mapped in a color temperature range of 4,171 K - 8,060 K, and cool images can be mapped in a color temperature range of over 8,060 K. Each of the four image groups can be represented by 2 bits as metadata. For example, hot images, warm images, moderate images, and cool images can be represented by 00, 01, 10, and 11, respectively. The four color temperature ranges are converted into reciprocal color temperature ranges, and the reciprocal color temperature ranges are divided into several equal sub-ranges by quantization. Reciprocal color temperature (RC) can be derived from the following equation using color temperature: RC = 10⁶/C. The reason such a reciprocal color temperature scale is used is that the difference between images in terms of reciprocal color temperature is the same as the difference between the images sensed by human eyes.

After converting the color temperature ranges into the reciprocal color temperature ranges, the reciprocal color temperature ranges are divided by N so that they can be represented by Upper(In(N)) bits. Here, Upper(X) indicates a minimum natural number greater than X. For example, Upper(2.1) = 3. In a case where M reciprocal color temperature ranges are divided by N, they can be represented by Upper(In(M)) + Upper(In(N)) bits. For example, in a case where there are four color temperature ranges and they are divided by 64, i.e., in a case where M = 4 and N = 64, the color temperature ranges can be represented by 8 bits because Upper(In(4)) + Upper(In(64)) = 2 + 6 = 8.

The database for image metadata is a set of color temperature metadata of still images or a bunch of images constituting a moving image, i.e., representative images of the moving image.

An image metadata decoding unit 200 decodes transmitted image metadata and thus computes the color temperature value of an input image. The method of decoding metadata varies depending on the type of metadata. If metadata represents the color temperature of an input image itself, for example, if a color temperature of 1,667 K - 25,000 K is represented by 15 bits, only a process of converting coded binary numbers into decimal numbers is needed. On the other hand, if the color temperature of an input image, which is computed by the color temperature calculating unit 110, is quantized through the metadata generator, the color temperature metadata input into the image metadata decoding unit 200 must be converted into a predetermined color temperature range, and a color temperature representing the predetermined color temperature range must be derived. For example, a color temperature representing a certain color temperature range can be the average of color temperature values in the color temperature range.

A binary number, like 00000001, which is quantized into 8 its through the color temperature metadata generator, is converted into a corresponding color temperature range, and the representative color temperature of the color temperature range is extracted. This method will be described in detail in the following.
(1) The first two bits of an 8-bit binary number are decoded in order to figure out which color temperature range corresponds to the 8-bit binary number. (For example, 00: hot → [1,667K, 2,250K], T_{lb} = 1,667, T_{ub} = 2,250)
(2) The maximum and minimum values in the corresponding color temperature range are converted into a reciprocal megakelvin scale. RT_{lb} = 106/Tlb and RT_{ub} = 106/2,250 = 444.444)
(3) The corresponding color temperature range [599.88, 444.444] is equally quantized into 64 sub-ranges.
(4) The remaining six bits (for example, 000001 in 00000001 → 2^{nd} sub-range) of the 8-bit binary number are decoded and their corresponding color temperature range (for example, [597.0149, 595.0227]) is figured out, thus calculating an average color temperature ((597.0149 + 595.0227) ÷ 2 = 596.0188). Next, the average color temperature is determined as a representative color temperature of the corresponding color temperature range and a color temperature corresponding to the 8-bits. (For example, 10⁶/596.0188 = 1,678 K)

Alternatively, a table of color temperatures corresponding to metadata is formed in advance following the above mentioned processes (1) through (4). The image metadata decoding unit 200 can be constituted so that a color temperature corresponding to certain 8-bit metadata can be found in the table by using the metadata as an address like in a look-up table method. In this case, even though a space where such table data need to be stored, is necessary, it is possible to extract a representative color temperature fast without using hardware for computation.

An image color temperature conversion unit 210 calculates a target color temperature based on an input image, the color temperature of the input image, and a color temperature preferred by a user. Next, the image color temperature conversion unit 210 modifies the input image using the target color temperature and the color temperature preferred by the user.

An image display unit 220 displays the modified image to the user.

The above-mentioned embodiments of the present invention can be written as programs that can be performed in a computer and can be realized in a commonly-used digital computer which operates such programs using a computer-readable recording medium.

The computer-readable recording medium includes a magnetic storage, such as a ROM, a floppy disk, or a hard disk, an optically readable medium, such as a CD-ROM or a DVD, and a carrier wave, such as transmission through the Internet.

According to the present invention, it is possible for a contents provider to perform a process of calculating a color temperature, which conventionally takes much effort and time, during preparing contents and to transmit a small amount of metadata with contents, i.e., image data. In addition, a contents client does not need to additionally calculate a color temperature, thus reducing the cost of manufacturing a display for the contents client. Accordingly, a user can adjust images using a portable terminal, even though the portable terminal is generally less effective than a TV set or a personal computer in terms of calculation. In addition, according to the present invention, it is possible to re-use the color temperatures of images, which are already computed, by storing them in a database for metadata 130. Accordingly, it is possible to more effectively display images on a user's terminal.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A method of generating metadata of an image, comprising:
receiving an image signal and finding color temperature information from the image signal;
calculating the color temperature information, converting the color temperature information into metadata, and storing the metadata as a descriptor of the image signal in a database; and
transmitting the metadata as well as the image signal to a user terminal over a communication network in response to the request of the user terminal;
wherein the metadata includes two bits of data corresponding to a perceptual color temperature browsing mode and six bits of data indicating the color temperature subsection; and
the converting of the color temperature into metadata comprises:
(a) dividing perceptual color temperature range into a hot temperature range, a warm temperature range, a moderate temperature range, and a cool temperature range, and generating the two bits of metadata corresponding to the temperature range to which the color temperature of the image belongs; and
(b) dividing each of the four color temperature ranges into 64 color temperature subsections, and generating the six bits of metadata corresponding to the color temperature subsection to which the color temperature of the image belongs.

2. A method for converting the color temperature of metadata using a method of generating metadata, of an image according to claim 1, comprising:
receiving a predetermined input image metadata corresponding to the color temperature of the input image, and color temperature information preferred by a user;
calculating the color temperature corresponding to the metadata; and
converting the color temperature of the input image using the color temperature calculated based on the metadata and the color temperature information preferred by a user;
wherein the metadata includes the two bits of data corresponding to the perceptual color temperature browsing mode and the six bits of data indicating the color temperature subsection to which the color temperature of the image belongs.

3. The method of claim 2 further comprising outputting the input image, the color temperature of which is converted, and providing the input image to a user.

4. A computer-readable recording medium, on which a program for realizing the method defined in any of claims 1 to 3 is recorded.

5. An apparatus for converting a metadata color temperature, comprising:
an input unit which is arranged to receive an input image, metadata corresponding to the color temperature of the input image, and color temperature information preferred by a user;
an image metadata decoding unit (200) which calculates a color temperature corresponding to the metadata; and
an image color temperature converting unit (210) which converts the color temperature of the input image using the color temperature calculated by the image metadata decoding unit and the color temperature information preferred by a user; and
means for outputting the input image;
**characterised in that** the image metadata is based on a division of color temperature into four perceptual color temperature browsing modes each divided into sixty four color temperature subsections, corresponding to respective color temperature ranges; and
the metadata includes 2 bits of data corresponding to the perceptual color temperature browsing mode; and
the metadata further includes 6 bits of data indicating the color temperature subsection to which the color temperature of the image belongs.

6. The apparatus of claim 5 further comprising an image display unit which outputs the input image, the color temperature of which is converted, and then provides the input image to a user.

7. The apparatus of claim 5 or 6, wherein the image metadata decoding unit (200) calculates the color temperature of an image coded as metadata and decodes the metadata following the way the image is coded.

8. The apparatus of claim 5 or 6, wherein the image metadata decoding unit (200) includes a predetermined look-up table, in which representative color temperatures of color temperature ranges, which the color temperature belongs to, and their corresponding metadata are recorded, and finds a color temperature value corresponding to certain metadata by searching the metadata in the look-up table.

## Patentansprüche

1. Verfahren zum Erzeugen von Metadaten eines Bildes, das Folgendes beinhaltet:
Empfangen eines Bildsignals und Einholen von Farbtemperaturinformationen von dem Bildsignal;
Berechnen der Farbtemperaturinformationen, Umwandeln der Farbtemperaturinformationen in Metadaten und Speichern der Metadaten als Deskriptor des Bildsignals in einer Datenbank; und
senden der Metadaten sowie des Bildsignals zu einem Eenutzerendgerät über ein Kommunikationsnetz als Reaktion auf die Anforderung des Benutzerendgeräts;
wobei die Metadaten zwei Datenbits, die einem Wahrnehmbare-Farbtemperatur-Browsing-Modus entsprechen, und sechs Datenbits beinhalten, die die Farbtemperatur-Subsektion anzeigen; und
das Umwandeln der Farbtemperatur in Metadaten Folgendes beinhaltet:
a) Unterteilen des wahrnehmbaren Farbtemperaturbereichs in einen heißen Temperaturbereich, einen warmen Temperaturbereich, einen mäßigen Temperaturbereich und einen kühlen Temperaturbereich, und Erzeugen der zwei Metadatenbits, die dem Temperaturbereich entsprechen, zu dem die Farbtemperatur des Bildes gehört; und
b) Unterteilen jedes der vier Farbtemperaturbereiche in 64 Farbtemperatur-Subsektionen und Erzeugen der sechs Metadatenbits, die der Farbtemperatur-Subsektion entsprechen, zu der die Farbtemperatur des Bildes gehört.

2. Verfahren zum Umwandeln der Farbtemperatur von Metadaten mit einem Verfahren zum Erzeugen von Metadaten eines Bildes nach Anspruch 1, das Folgendes beinhaltet:
Empfangen der Metadaten eines vorbestimmten Eingangsbildes, die der Farbtemperatur des Eingangsbildes entsprechen, und von von einem Benutzer bevorzugten Farbtemperaturinformationen;
Berechnen der Farbtemperatur, die den Metadaten entspricht; und
Umwandeln der Farbtemperatur des Eingangsbildes anhand der Farbtemperatur, die auf der Basis der Metadaten und der von einem Benutzer bevorzugten Farbtemperaturinformationen berechnet wurde;
wobei die Metadaten die beiden dem Wahrnehmbare-Farbtemperatur-Browsing-Modus entsprechenden Datenbits und die sechs Datenbits beinhalten, die die Farbtempetatur-Subsektion anzeigen, zu der die Farbtemperatur des Bildes gehört.

3. Verfahren nach Anspruch 2, das ferner das Ausgeben des Eingangsbildes, dessen Farbtemperatur umgewandelt wird, und das Senden des Eingangsbildes, zu einem Benutzer beinhaltet.

4. Rechnerlesbares Aufzeichnungsmedium, auf dem ein Programm zum Ausführen des in einem der Anspräche 1 bis 3 definierten Verfahrens aufgezeichnet ist.

5. Vorrichtung zum Umwandeln einer Metadaten-Farbtemperatur, die Folgendes umfasst:
eine Eingabeeinheit zum Empfangen eines Eingangsbildes, von Metadaten, die der Farbtemperatur des Eingangsbildes entsprechen, und von von einem Benutzer bevorzugten Farbtemperaturinformationen;
eine Bildmetadaten-Decodiereinheit (200), die eine den Metadaten entsprechende Farbtemperatur berechnet; und
eine Bildfarbtemperatur-Umwandluagseinheit (210), die die Farbtemperatur des Eingangsbildes anhand der von der Bildmetadaten-Decodiereinheit berechneten Farbtemperatur und den von einem Benutzer bevorzugten Farbtemperaturinformationen umwandelt; und
Mittel zum Ausgeben des Eingangsbildes;
**dadurch gekennzeichnet, dass** die Bildmetadaten auf einer Unterteilung der Farbtemperatur in vier Wahrnehmbare-Farbtemperatur-Browsing-Modi basieren, die jeweils in vierundsechzig Farbtemperatur-Subnektionen unterteilt sind, die jeweiligen Farbtemperaturbereichen entsprechen; und
die Metadaten 2 Datenbits beinhalten, die dem Wahrnehmbare-Farbtemperatur-Browsing-Modus entsprechen; und
die Metadaten ferner 6 Datenbits beinhalten, die die Farbtemperatur-Subsektion anzeigen, zu der die Farbtemperatur des Bildes gehört.

6. Vorrichtung nach Anspruch 5, die ferner eine Bildanzeigeeinheit umfasst, die das Eingangsbild ausgibt, dessen Farbtemperatur umgewandelt wird, und das Eingangsbild dann zu einem Benutzer sendet.

7. Vorrichtung nach Anspruch 5 oder 6, wobei die Bildmetadaten-Decodiereinheit (200) die Farbtemperatur eines als Metadaten codierten Bildes berechnet und die Metadaten auf demselben Weg decodiert, auf dem das Bild codiert wurde.

8. Vorrichtung nach Anspruch 5 oder 6, wobei die Bildmetadaten-Decodiereinheit (200) eine vorbestimmte Lookup-Tabelle beinhaltet, in der repräsentative Farbtemperaturen von Farbtemperaturbereichen, zu denen die Farbtemperatur gehört, und deren entsprechenden Metadaten aufgezeichnet sind, und einen bestimmten Metadaten entsprechenden Farbtemperaturwert durch Suchen der Metadaten in der Lookup-Tabelle findet.

## Revendications

1. Procédé de génération de méta-données d'une image, comprenant :
la réception d'un signal d'image et l'obtention d'informations de température chromatique à partir du signal d'image ;
le calcul des informations de température chromatique, la conversion des informations de température chromatique en méta-données, et la mémorisation des méta-données en tant que descripteur du signal d'image dans une base de données ; et
la transmission des méta-données ainsi que du signal d'image à un terminal utilisateur sur un réseau de communications en réponse à la requête du terminal utilisateur ;
dans lequel les méta-données comportent deux bits de données correspondant à un mode d'exploration de températures chromatiques perceptuelles et six bits de données indiquant la sous-section de températures chromatiques ; et
la conversion de la température chromatique en méta-données comprend,
(a) la division d'une plage de températures chromatiques perceptuelles en une plage de températures très chaudes, une plage de températures chaudes, une plage de températures modérées et une plage de températures froides, et la génération des deux bits de méta-dinnées correspondant à la plage de températures à laquelle appartient la température chromatique de l'image et
(b) la division de chacune des quatre plages de températures chromatiques en 64 sous-sections de températures chromatiques, et la génération des six bits de méta-données correspondant à la sous-section de températures chromatiques à laquelle appartient la température chromatique de l'image.

2. Procédé de conversion de la température chromatique de méta-données utilisant un procédé de génération de méta-données d'une image selon la revendication 1, comprenant,
la réception de méta-données d'une image d'entrée prédéterminée correspondant à la température chromatique de l'image d'entrée, et d'informations de température chromatique préférée d'un utilisateur ;
le calcul de la température chromatique correspondant aux méta-données ; et
la conversion de la température chromatique de l'image d'entrée en utilisant la température chromatique calculée en fonction des méta-données et des informations de température chromatique préférée d'un utilisateur ;
dans lequel les méta-données comportent les deux bits de données correspondant au mode d'exploration de températures chromatiques perceptuelles et les six bits de données indiquant la sous-section de températures chromatiques à laquelle appartient la température chromatique de l'image.

3. Procédé selon la revendication 2, comprenant en outre la production en sortie de l'image d'entrée, dont la température chromatique est convertie, et la délivrance de l'image d'entrée à un utilisateur.

4. Support d'enregistrement lisible par ordinateur, sur lequel est enregistré un programme pour réaliser le procédé défini dans l'une quelconque des revendications 1 à 3.

5. Appareil de conversion d'une température chromatique de méta-données, comprenant :
une unité d'entrée qui est agencée pour recevoir une image d'entrée, des méta-données correspondant à la température chromatique de l'image d'entrée, et des informations de température chromatique préférée d'un utilisateur ;
une unité de décodage de méta-données d'image (200) qui calcule une température chromatique correspondant aux méta-données; et
une unité de conversion de températures chromatiques d'image (210) qui convertit la température chromatique de l'image d'entrée en utilisant la température chronatique calculée par l'unité de décodage de méta-données d'image et les informations de température chromatique préférée d'un utilisateur ; et
un moyen pour produire en sortie l'image d'entrée ;
**caractérisé en ce que** les méta-données d'image sont basées sur une division de température chromatique en quatre modes d'exploration de températures chromatique perceptuelles divisés chacun en soixante quatre sous-sections de températures chromatiques, correspondant à des plages de températures chromatiques respectives ; et
les méta-données comportent 2 bits de données correspondant au mode d'exploration de températures chromatiques perceptuelles ; et
les méta-données comportent en outre 6 bits de données indiquant la sous-section de températures chromatiques à laquelle appartient la température chromatique de l'image.

6. Appareil selon la revendication 5, comprenant en outre une unité d'affichage d'image qui produit en sortie l'image d'entrée, dont la température chromatique est convertie, et fournit ensuite l'image d'entrée à un utilisateur.

7. Appareil selon la revendication 5 ou 6, dans lequel l'unité de décodage de méta-données d'image (200) calcule la température chromatique d'une image codée en méta-données et décode les méta-données en fonction du codage de l'image.

8. Appareil selon la revendication 5 ou 6, dans lequel l'unité de décodage de méta-données d'image (200) comporte une table de consultation prédéterminée, dans laquelle des températures chromatiques représentatives de plages de températures chromatiques, à laquelle appartient la température chromatique, et leurs méta-données correspondantes sont enregistrées, et trouve une valeur de température chromatique correspondant à certaines méta-données en recherchant les méta-données dans la table de consultation.
